# EUROPÄISCHE PATENTSCHRIFT

(11) **EP 3 510 619 B1**
(45) Veröffentlichungstag und Bekanntmachung des Hinweises auf die Patenterteilung: **17.02.2021**
(21) Anmeldenummer: 17764589.2
(22) Anmeldetag: 08.09.2017
(51) Int. Cl.: H01H 9/54, H02H 3/08, H01H 9/56

(54) **SCHUTZSCHALTGERÄT**
CIRCUIT BREAKER
DISJONCTEUR

(30) Priorität: 09.09.2016 DE 102016117006
(43) Veröffentlichungstag der Anmeldung: 17.07.2019
(73) Patentinhaber: Eaton Intelligent Power Limited, Dublin 4 (IE)
(72) Erfinder: ASKAN, Kenan, 1090 Wien (AT)
(74) Vertreter: Eaton IP Group EMEA
(86) Internationale Anmeldenummer: PCT/EP2017/072669
(87) Internationale Veröffentlichungsnummer: WO 2018/046709

(56) Entgegenhaltungen:
- WO-A1-2015/028634
- DE-A1- 3 233 650
- US-A- 5 182 456
- US-A1- 2015 371 799

## Beschreibung

Die Erfindung betrifft ein Schutzschaltgerät gemäß dem Oberbegriff des Patentanspruches 1.

Es ist ein entsprechendes Schutzschaltgerät aus der WO 2015/028634 A1 der Anmelderin bekannt. Derartige Schaltgeräte arbeiten zufolge des sog. Zero Voltage Switching. Beim Ausschalten des Schutzschaltgeräts wird dabei erst der Bypassschalter geöffnet, wobei ein Lichtbogen entsteht, und der Strom auf die Halbleiterschaltungsanordnung kommutiert.

Die US 2015/371799 A1 beschreibt ein Blinklicht.

Die US 5 182 456 A beschreibt eine Schaltung mit einem Relais und einem MOSFET. Der MOSFET wird erst eingeschaltet, nachdem die Relais-Kontakte nicht mehr prellen. Dadurch werden HF-Störungen verringert.

Die DE 32 33 650 beschreibt eine Entladeschaltung für eine Kondensator, welche ein Relais und einen Thyristor aufweist, wobei das Relais 1 bis 2 ms vor dem Thyristor eingeschaltet wird.

Aufgabe der Erfindung ist es daher ein Schutzschaltgerät der eingangs genannten Art anzugeben, mit welchem die genannten Nachteile vermieden werden können, welches eine geringere Baugröße und eine längere Lebensdauer aufweist, und welches mit geringem Aufwand herstellbar ist.

Erfindungsgemäß wird dies durch die Merkmale des Patentanspruches 1 erreicht.

Dadurch kann ein Schutzschaltgerät geschaffen werden, welches eine geringe Baugröße und eine lange Lebensdauer aufweist und welches mit geringem Aufwand herstellbar ist.

Dadurch wird die Amplitude der Spannungsspitze, welcher der spannungsabhängige Widerstand ausgesetzt ist, deutlich reduziert. Dadurch kann ein spannungsabhängiger Widerstand bzw. ein Varistor, mit geringerer Nennspannung verwendet werden. Ein solcher weist gegenüber einem Varistor mit höherer Nennspannung einen geringeren Leckstrom auf, was im Betrieb zu einer geringeren Erwärmung des Schutzschaltgeräts führt, wodurch die Lebensdauer dieses Bauteils, sowie der anderen Halbleiter in dessen Umgebung verlängert werden kann.

Dadurch können weiters bei den Leistungshalbleiterschaltern, bei welchen es sich in der Regel um IGBT handelt, solche mit geringerer Kollektor-Emitter-Sperrspannung verwendet werden. Weiters können dadurch Dioden mit geringerer periodischer Spitzensperrspannung verwendet werden. Solche Bauteile weisen gegenüber höher belastbaren Bauteilen deutlich geringere Baugröße auf, und sind zudem weniger kostenintensiv. Dadurch können sowohl die Kosten und die Baugröße eines Schutzschaltgeräts verringert werden, wobei gleichzeitig die Eigenerwärmung reduziert und entsprechend die Lebensdauer erhöht wird.

Alternativ hiezu kann bei unveränderter Baugröße die elektrische Belastbarkeit eines Schutzschaltgeräts deutlich vergrößert werden.

Leistungshalbleiter mit geringerer Kollektor-Emitter-Sperrspannung bzw. periodischer Spitzensperrspannung weisen weiters einen geringeren Innenwiderstand auf, wodurch im Falle eines Abschaltens eines Kurzschlussstromes die Zeit zum Kommutieren des sich aufbauenden Kurzschlussstromes vom Bypasszweig auf die erste Halbleiterschaltung verringert werden kann. Dadurch kann die Belastung sowohl des Bypassschalters als auch der ersten Halbleiterschaltungsanordnung weiter verringert werden.

Durch die Verringerung der Baugröße, daher der physischen Fläche, der Leistungshalbleiter kann die Schleifeninduktanz der ersten Halbleiterschaltung deutlich verringert werden. Diese ist neben dem Widerstand ein weiterer Haupteinflussfaktor der Zeit zum Kommutieren des sich aufbauenden Kurzschlussstromes vom Bypasszweig auf die erste Halbleiterschaltung, welche durch die Verringerung der physischen Fläche der Leistungshalbleiter weiter verringert wird.

Weiters wird dadurch die Höhe transienter Spannungsspitzen verringert, welche durch die internen Schaltvorgänge des Schutzschaltgeräts von diesem ins Netz abgegeben werden.

Weiters kann dadurch ein Snubber im Bereich der Halbleiterschaltungsanordnung deutlich verkleinert bzw. gänzlich auf einen solchen verzichtet werden.

Die Unteransprüche betreffen weitere vorteilhafte Ausgestaltungen der Erfindung. Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen näher beschrieben. Dabei zeigt:
Fig. 1 eine Ausführungsform eines gegenständlichen Schutzschaltgeräts; und
Fig. 2 eine zeitliche Schaltsequenz eines Schutzschaltgeräts nach Fig. 1, die nicht Teil der Erfindung ist.

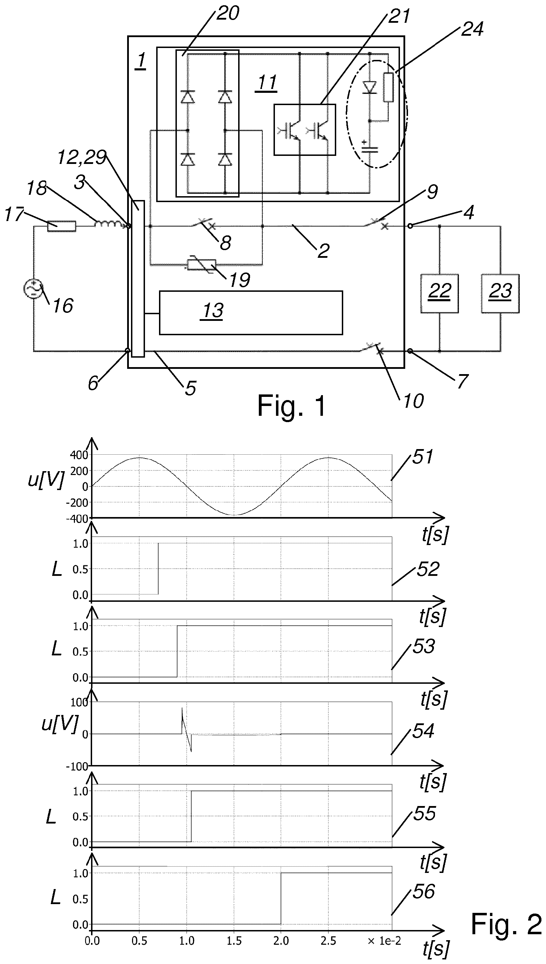

Die Fig. 1 zeigt eine bevorzugte Ausführungsform eines Schutzschaltgerät 1 mit zumindest einer Außenleiterstrecke 2 von einem Außenleiterversorgungsanschluss 3 des Schutzschaltgeräts 1 zu einem Außenleiterlastanschluss 4 des Schutzschaltgeräts 1, und einer Neutralleiterstrecke 5 von einem Neutralleiteranschluss 6 des Schutzschaltgeräts 1 zu einem Neutralleiterlastanschluss 7 des Schutzschaltgeräts 1, wobei in der Außenleiterstrecke 2 ein mechanischer Bypassschalter 8 und ein erster mechanischer Trennschalter 9 seriell angeordnet sind, wobei in der Neutralleiterstrecke 5 ein zweiter mechanischer Trennschalter 10 angeordnet ist, wobei eine Halbleiterschaltungsanordnung 11 des Schutzschaltgeräts 1 parallel zum Bypassschalter 8 geschaltet ist, wobei in der Außenleiterstrecke 2 eine Strommessanordnung 12 angeordnet ist, welche mit einer elektronischen Steuereinheit 13 des Schutzschaltgeräts 1 verbunden ist, wobei die elektronische Steuereinheit 13 dazu ausgebildet ist, den Bypassschalter 8, den ersten mechanischen Trennschalter 9, den zweiten mechanischen Trennschalter 10 und die Halbleiterschaltungsanordnung 11 vorgebbar zu betätigen, und wobei parallel zum Bypassschalter 8 ein spannungsabhängiger Widerstand 19, insbesondere ein Varistor, angeordnet ist, wobei dass die elektronische Steuereinheit 13 dazu ausgebildet ist, beim Einschalten des Schutzschaltgeräts 1 erst den zweiten mechanischen Trennschalter 10 zum Schließen zu betätigen, nachfolgend den ersten mechanischen Trennschalter 9 zum Schließen zu betätigen, und eine vorgebbare erste Zeitdauer danach die Halbleiterschaltungsanordnung 11 einzuschalten.

Dadurch kann ein Schutzschaltgerät 1 geschaffen werden, welches eine geringe Baugröße und eine lange Lebensdauer aufweist und welches mit geringem Aufwand herstellbar ist.

Dadurch wird die Amplitude der Spannungsspitze, welcher der spannungsabhängige Widerstand 19 ausgesetzt ist, deutlich reduziert. Dadurch kann ein spannungsabhängiger Widerstand 19 bzw. ein Varistor, mit geringerer Nennspannung verwendet werden. Ein solcher weist gegenüber einem Varistor mit höherer Nennspannung einen geringeren Leckstrom auf, was im Betrieb zu einer geringeren Erwärmung des Schutzschaltgeräts 1 führt, wodurch die Lebensdauer dieses Bauteils, sowie der anderen Halbleiter in dessen Umgebung verlängert werden kann.

Dadurch können weiters bei den Leistungshalbleiterschaltern, bei welchen es sich in der Regel um IGBT 21 handelt, solche mit geringerer Kollektor-Emitter-Sperrspannung verwendet werden. Weiters können dadurch Dioden mit geringerer periodischer Spitzensperrspannung verwendet werden. Solche Bauteile weisen gegenüber höher belastbaren Bauteilen deutlich geringere Baugröße auf, und sind zudem weniger kostenintensiv. Dadurch können sowohl die Kosten und die Baugröße eines Schutzschaltgeräts 1 verringert werden, wobei gleichzeitig die Eigenerwärmung reduziert und entsprechend die Lebensdauer erhöht wird. Alternativ hiezu kann bei unveränderter Baugröße die elektrische Belastbarkeit eines Schutzschaltgeräts 1 deutlich vergrößert werden.

Leistungshalbleiter mit geringerer Kollektor-Emitter-Sperrspannung bzw. periodischer Spitzensperrspannung weisen weiters einen geringeren Innenwiderstand auf, wodurch im Falle eines Abschaltens eines Kurzschlussstromes die Zeit zum Kommutieren des sich aufbauenden Kurzschlussstromes vom Bypasszweig auf die erste Halbleiterschaltung 11 verringert werden kann. Dadurch kann die Belastung sowohl des Bypassschalters 8 als auch der ersten Halbleiterschaltungsanordnung 11 weiter verringert werden.

Durch die Verringerung der Baugröße, daher der physischen Fläche, der Leistungshalbleiter 21 kann die Schleifeninduktanz der ersten Halbleiterschaltungsanordnung 11 deutlich verringert werden. Diese ist neben dem Widerstand ein weiterer Haupteinflussfaktor der Zeit zum Kommutieren des sich aufbauenden Kurzschlussstromes vom Bypasszweig auf die erste Halbleiterschaltungsanordnung 11, welche durch die Verringerung der physischen Fläche der Leistungshalbleiter 21 weiter verringert wird.

Weiters wird dadurch die Höhe transienter Spannungsspitzen verringert, welche durch die internen Schaltvorgänge des Schutzschaltgeräts 1 von diesem ins Netz abgegeben werden.

Weiters kann dadurch ein Snubber 24 im Bereich der Halbleiterschaltungsanordnung 11 deutlich verkleinert bzw. gänzlich auf einen solchen verzichtet werden.

Das Schutzschaltgerät 1 gemäß Fig. 1 weist eine Außenleiterstrecke 2 sowie eine Neutralleiterstrecke 5 auf. Die Außenleiterstrecke 2 verläuft durch das Schutzschaltgerät 1 von einem Außenleiterversorgungsanschluss 3 zu einem Außenleiterlastanschluss 4. Die Neutralleiterstrecke 5 verläuft durch das Schutzschaltgerät 1 von einem Neutralleiteranschluss 6 zu einem Neutralleiterlastanschluss 7. Die betreffenden Anschlüsse 3, 4, 6, 7 sind jeweils bevorzugt als Schraubanschlussklemmen bzw. Steckanschlussklemmen ausgebildet, und in dem Schutzschaltgerät 1 von außen zugänglich angeordnet.

Bei dem gegenständlichen Schutzschaltgerät 1 handelt es sich bevorzugt um ein Niederspannungs-Schutzschaltgerät. Als Niederspannung wird wie an sich üblich der Bereich bis 1000V Wechselspannung bzw. 1500V Gleichspannung bezeichnet.

Das Schutzschaltgerät 1 weist bevorzugt ein Isolierstoffgehäuse auf.

In der Außenleiterstrecke 2 sind ein mechanischer Bypassschalter 8 und ein erster mechanischer Trennschalter 9 seriell angeordnet. In der Neutralleiterstrecke 5 ist ein zweiter mechanischer Trennschalter 10 angeordnet. Parallel zum Bypassschalter 8 ist eine Halbleiterschaltungsanordnung 11 geschaltet.

Weiters ist parallel zum Bypassschalter 8 ein spannungsabhängiger Widerstand 19 geschaltet, welcher insbesondere als Metall-Oxide-Varistor ausgebildet ist.

Das Schutzschaltgerät 1 weist weiters eine Strommessanordnung 12 auf, welche in der Außenleiterstrecke 2 angeordnet ist, und welche bevorzugt umfassend einem Shunt-Widerstand ausgebildet ist.

Die Strommessanordnung 12 ist mit einer elektronischen Steuereinheit 13 des Schutzschaltgeräts 1 verbunden, welche bevorzugt umfassend einen Mikrocontroller bzw. Mikroprozessor ausgebildet ist. Die elektronische Steuereinheit 13 ist dazu ausgebildet, den Bypassschalter 8, den ersten mechanischen Trennschalter 9, den zweiten mechanischen Trennschalter 10 und die Halbleiterschaltungsanordnung 11 anzusteuern, daher diese vorgebbar zu betätigen bzw. zu schalten. Hiezu ist die elektronische Steuereinheit 13 mit der ersten Halbleiterschaltungsanordnung 11, sowie weiters mit, insbesondere elektromagnetischen, Betätigungselementen der mechanischen Schalter, daher des Bypassschalters 8, des ersten mechanischen Trennschalters 9 und des zweiten mechanischen Trennschalters 10 bevorzugt schaltungstechnisch verbunden. Die entsprechenden Verbindungen ausgehend von der elektronischen Steuereinheit 13 sind nicht in Fig. 1 dargestellt.

Die Halbleiterschaltungsanordnung 11 weist bevorzugt eine Gleichrichterschaltung 20, welche bevorzugt als Vollbrücke ausgebildet ist, sowie zwei, bevorzugt als IGBT ausgebildete, Leistungshalbleiterschalter 21 als eigentliche Schalt- bzw. Regelelemente auf.

In Fig. 1 ist neben dem eigentlichen Schutzschaltgerät 1 weites die elektrische Umgebung angedeutet. Dabei ist das Versorgungsnetz durch die AC/DC-Netzspannungsquelle 16, den Netzinnenwiderstand 17 und die Netzinduktivität 18 dargestellt. Weiters ist eine elektrische Last 23, sowie ein elektrischer Fehler 22 in Form eines Kurzschlusses dargestellt.

Beim einem Schutzschaltgerät 1 gemäß Fig. 1 ist vorgesehen, dass ein Abschaltvorgang von dem Bypassschalter 8 und der ersten Halbleiterschaltungsanordnung 11 durchgeführt wird, und die ersten und zweiten Trennschalter 9, 10 lediglich dazu dienen, nach erfolgter Abschaltung eine galvanische Trennung des Lastkreises sicherzustellen.

Zum vorgegebenen, insbesondere manuell gesteuerten, Ab- zw. Ausschalten des Schutzschaltgeräts 1, insbesondere während des Betriebes des Schutzschaltgeräts 1 innerhalb des Nennstrombereichs, ist vorgesehen, dass der Bypassschalter 8 beim Nulldurchgang des Stromes ausgeschaltet bzw. geöffnet wird. Sofern die Last reaktiv, daher induktiv bzw. kapazitiv, ist, wird die Spannung beim Nulldurchgang des Stromes und folglich beim Abschalten nicht null sein. Die Höhe der Spannung ist dabei in bekannter Weise abhängig vom jeweiligen cos ϕ. Es ist vorgesehen nach dem Öffnen des Bypassschalters 8 und dem anschließenden Sperren der IGBT 21 den ersten und zweiten mechanischen Trennschalter 9, 10 zu öffnen, sobald der Strom durch das Schutzschaltgerät 1 klein genug ist, daher sobald der Strom einen vorgebbaren Grenzwert unterschreitet, bei Wechselstrom insbesondere im Bereich des Nulldurchganges. Dadurch kann die leckstrombedingte Erwärmung des Varistors auch bei stark reaktiven Lasten gering gehalten werden.

Zum Einschalten des Schutzschaltgeräts 1 ist vorgesehen, dass die elektronische Steuereinheit 13, welche entsprechend ausgebildet ist, erst den zweiten mechanischen Trennschalter 10 und nachfolgend den ersten mechanischen Trennschalter 9 derartig betätigt, dass deren Schaltkontakte geschlossen werden. Bevorzugt sind der erste und der zweite mechanische Trennschalter 9, 10 jeweils als Teil eines bistabilen Relais ausgebildet. Eine vorgebbare erste Zeitdauer danach schaltet die Steuereinheit 13 die Halbleiterschaltungsanordnung 11 ein.

Die erste Zeitdauer ist bevorzugt derart lange ist, dass Schaltkontakte des ersten mechanischen Trennschalters 9 und Schaltkontakte des zweiten mechanischen Trennschalters 10 einen mechanisch stationären Zustand erreicht haben. Daher, dass diese ohne Prellen sicher aneinander anliegen.

Erfindungsgemäß hat es sich in der praktischen Umsetzung der gegenständlichen Erfindung gezeigt, dass die erste Zeitdauer zwischen 0,8 ms und 1,2 ms, insbesondere 1 ms, beträgt.

Das gegenständliche Schutzschaltgerät 1 ist dabei bevorzugt sowohl zum Betrieb an einem Gleichstromnetz bzw. an einem Wechselspannungsnetz vorgesehen bzw. ausgebildet.

Bei Ausbildung des Schutzschaltgeräts 1 als Wechselspannungsschaltgerät ist vorgesehen, dass dieses weiters eine Spannungsmessanordnung 29 aufweist, welche mit der Steuereinheit 13 verbunden ist, und dass die elektronische Steuereinheit 13 dazu ausgebildet ist, den ersten mechanischen Trennschalter 9 und den zweiten mechanischen Trennschalter 10 eine vorgebbare zweite Zeitdauer vor einem ersten Nulldurchgang einer angeschlossenen Netzspannung zu betätigen. Die Spannungsmessanordnung 29 ist in Fig. 1 lediglich zusammen mit der Strommessanordnung 12 dargestellt.

Energieversorgungsnetze mit einer alternierenden Wechselspannung sind in der Regel hinsichtlich deren Netzfrequenz sehr stabil, wobei Schwankungen zwischen unmittelbar aufeinander folgenden Nulldurchgängen äußerst gering ausfallen. Bevorzugt ist vorgesehen, dass vor dem eigentlichen Einschaltvorgang anhand einer vorgebbaren Anzahl an Nulldurchgängen eine aktuelle Periodenlänge des jeweiligen Netzes ermittelt wird. Dadurch ist ein derartiges Schutzschaltgerät 1 gleichermaßen und ohne weitere Einstellungen in Netzen unterschiedlicher Netzfrequenzen einsetzbar. Nach einigen Nulldurchgängen, insbesondere acht bis zwölf, kann ein ausreichend genauer Wert der Periodenlänge ermittelt werden. Sobald dies erfolgt ist, wird nach einem sog. nullten Nulldurchgang bis zum Versenden des Einschaltsignals für den ersten und zweiten mechanischen Trennschalter 9, 10 durch die elektronische Steuereinheit 13 die ermittelte Periodendauer weniger der zweiten Zeitdauer abgewartet. Derart können die beiden Trennschalter 9, 10 zum angegebenen Zeitpunkt vor dem ersten Nulldurchgang in der dargelegten Reihenfolge, derzufolge erst der zweite Trennschalter 10, welcher die Neutralleiterstrecke 5 schaltet, und erst nachfolgend der erste Trennschalter 9 geschlossen werden, eingeschaltet werden.

Erfindungsgemäß ist vorgesehen, dass die zweite Zeitdauer halb so lange ist wie die erste Zeitdauer. Dabei sind diese dann symmetrisch um den ersten Nulldurchgang herum angeordnet.

Bevorzugt ist weiters vorgesehen, dass die elektronische Steuereinheit 13 dazu ausgebildet ist, an einem, dem ersten Nulldurchgang unmittelbar nachfolgenden zweiten Nulldurchgang der Netzspannung den Bypassschalter 8 einzuschalten. Fig. 2 zeigt einen entsprechenden Einschaltvorgang in sechs Diagrammen 51, 52, 53, 54, 55, 56. Dabei zeigt das erste Diagramm 51 den Verlauf der Netzspannung, welche auch als Sourcevoltage bezeichnet werden kann. Das zweite Diagramm 52 zeigt das logische Ein-Ausschaltsignal des zweiten mechanischen Trennschalters 10, wobei der mit L bezeichnete logische Wert 1, wie auch in den Diagrammen 53, 55 und 56, repräsentativ für "EIN" und der logische Wert 0 repräsentativ für "AUS" steht. Das dritte Diagramm 53 zeigt das logische Ein-Ausschaltsignal des ersten mechanischen Trennschalters 9. Das vierte Diagramm 54 zeigt den Verlauf der Spannung am spannungsabhängigen Widerstand 19. Das fünfte Diagramm 55 zeigt das logische Ein-Ausschaltsignal für die IGBT. Das sechste Diagramm 56 zeigt das logische Ein-Ausschaltsignal des Bypassschalters 8.

Durch die gegenständlichen Maßnahmen kann die Halbleiterschaltungsanordnung 11 auch dämpfungsgliedfrei ausgebildet sein, wodurch weitere Bauteile eingespart werden können, und wodurch es im Einschaltvorgang vermieden werden kann, einen Kondensator aufladen zu müssen. Dadurch zieht die Halbleiterschaltungsanordnung 11 im Einschaltvorgang weniger Strom. Ein entsprechendes Dämpfungslied, welches auch als Snubber 24 bezeichnet wird, ist in Fig.1 eingezeichnet.

Gemäß einer bevorzugen Weiterführung ist vorgesehen, dass der spannungsabhängige Widerstand 19 als Thermofuse-Varistor ausgebildet ist, wodurch die Betriebssicherheit weiter gesteigert werden kann.

## Patentansprüche

1. Schutzschaltgerät (1) mit zumindest einer Außenleiterstrecke (2) von einem Außenleiterversorgungsanschluss (3) des Schutzschaltgeräts (1) zu einem Außenleiterlastanschluss (4) des Schutzschaltgeräts (1), und einer Neutralleiterstrecke (5) von einem Neutralleiteranschluss (6) des Schutzschaltgeräts (1) zu einem Neutralleiterlastanschluss (7) des Schutzschaltgeräts (1), wobei in der Außenleiterstrecke (2) ein mechanischer Bypassschalter (8) und ein erster mechanischer Trennschalter (9) seriell angeordnet sind, wobei in der Neutralleiterstrecke (5) ein zweiter mechanischer Trennschalter (10) angeordnet ist, wobei eine Halbleiterschaltungsanordnung (11) des Schutzschaltgeräts (1) parallel zum Bypassschalter (8) geschaltet ist, wobei in der Außenleiterstrecke (2) eine Strommessanordnung (12) angeordnet ist, welche mit einer elektronischen Steuereinheit (13) des Schutzschaltgeräts (1) verbunden ist, wobei die elektronische Steuereinheit (13) dazu ausgebildet ist, den Bypassschalter (8), den ersten mechanischen Trennschalter (9), den zweiten mechanischen Trennschalter (10) und die Halbleiterschaltungsanordnung (11) vorgebbar zu betätigen, und wobei parallel zum Bypassschalter (8) ein spannungsabhängiger Widerstand (19), insbesondere ein Varistor, angeordnet ist, wobei die elektronische Steuereinheit (13) dazu ausgebildet ist, beim Einschalten des Schutzschaltgeräts (1) erst den zweiten mechanischen Trennschalter (10) zum Schließen zu betätigen, nachfolgend den ersten mechanischen Trennschalter (9) zum Schließen zu betätigen, und eine vorgebbare erste Zeitdauer danach die Halbleiterschaltungsanordnung (11) einzuschalten, wobei das Schutzschaltgerät (1) als Wechselspannungsschaltgerät ausgebildet ist, und weiters eine Spannungsmessanordnung (29) aufweist, welche mit der Steuereinheit (13) verbunden ist, und dass die elektronische Steuereinheit (13) dazu ausgebildet ist, den ersten mechanischen Trennschalter (9) und den zweiten mechanischen Trennschalter (10) eine vorgebbare zweite Zeitdauer vor einem ersten Nulldurchgang einer angeschlossenen Netzspannung zu betätigen, **dadurch gekennzeichnet, dass** die erste Zeitdauer derart lange ist, dass Schaltkontakte des ersten mechanischen Trennschalters (9) und Schaltkontakte des zweiten mechanischen Trennschalters (10) einen mechanisch stationären Zustand erreicht haben, dass die erste Zeitdauer zwischen 0,8 ms und 1,2 ms, insbesondere 1 ms, beträgt, und dass die zweite Zeitdauer halb so lange ist wie die erste Zeitdauer.

2. Schutzschaltgerät (1) nach Anspruch 1, **dadurch gekennzeichnet, dass** die elektronische Steuereinheit (13) dazu ausgebildet ist, an einem, dem ersten Nulldurchgang unmittelbar nachfolgenden zweiten Nulldurchgang der Netzspannung den Bypassschalter (8) einzuschalten.

3. Schutzschaltgerät (1) nach einem der Ansprüche 1 oder 2, **dadurch gekennzeichnet, dass** der spannungsabhängige Widerstand (19) als Thermofuse-Varistor ausgebildet ist.

4. Schutzschaltgerät (1) nach einem der Ansprüche 1 bis 3, **dadurch gekennzeichnet, dass** die Halbleiterschaltungsanordnung (11) dämpfungsgliedfrei ausgebildet ist.

## Claims

1. Protective switching device (1) having at least one external conductor path (2) from an external conductor supply connection (3) of the protective switching device (1) to an external conductor load connection (4) of the protective switching device (1), and a neutral conductor path (5) from a neutral conductor connection (6) of the protective switching device (1) to a neutral conductor load connection (7) of the protective switching device (1), wherein a mechanical bypass switch (8) and a first mechanical isolator (9) are arranged in series in the outer conductor path (2), wherein a second mechanical isolator (10) is arranged in the neutral conductor path (5), wherein a semiconductor circuit arrangement (11) of the protective switching device (1) is connected in parallel with the bypass switch (8), wherein a current measuring arrangement (12) is arranged in the external conductor path (2) and is connected to an electronic control unit (13) of the protective switching device (1), the electronic control unit (13) being designed to actuate the bypass switch (8), the first mechanical isolator (9), the second mechanical isolator (10) and the semiconductor circuit arrangement (11) in a pre-determinable manner, and a voltage-dependent resistor (19), in particular a varistor, being arranged in parallel with the bypass switch (8), the electronic control unit (13) being designed, when the protective switching device (1) is switched on, first to actuate the second mechanical isolating switch (10) for closing, then to actuate the first mechanical isolating switch (9) for closing, and a pre-determinable first period of time thereafter to switch on the semiconductor circuit arrangement (11), the protective switching device (1) being designed as an AC voltage switching device, and further having a voltage measuring arrangement (29) which is connected to the control unit (13), and that the electronic control unit (13) is designed to actuate the first mechanical isolator (9) and the second mechanical isolator (10) a pre-determinable second period of time before a first zero point of a connected mains voltage, **characterised in that** the first period of time is so long that switching contacts of the first mechanical isolator (9) and switching contacts of the second mechanical isolator (10) have reached a mechanically stationary state, that the first time period is between 0.8 ms and 1.2 ms, notably 1 ms, and that the second time period is in half as long as the first time period.

2. Protective switching device (1) according to claim 1, **characterised in that** the electronic control unit (13) is designed to switch on the bypass switch (8) at a second zero point of the mains voltage immediately following the first zero point.

3. Protective switching device (1) according to any one of claims 1 or 2, **characterised in that** the voltage-dependent resistor (19) is designed as a ThermoFuse varistor.

4. Protective switching device (1) according to any one of claims 1 to 3, **characterised in that** the semiconductor circuit arrangement (11) is designed without attenuators.

## Revendications

1. Disjoncteur de protection (1) avec au moins une section de conducteur extérieur (2) depuis un raccord d'alimentation de conducteur extérieur (3) du disjoncteur de protection (1) jusqu'à un raccord de charge de conducteur extérieur (4) du disjoncteur de protection (1), et une section de conducteur neutre (5) depuis un raccord de conducteur neutre (6) du disjoncteur de protection (1) jusqu'à un raccord de charge de conducteur neutre (7) du disjoncteur de protection (1), selon lequel dans la section de conducteur extérieur (2), un commutateur de dérivation mécanique (8) et un premier sectionneur mécanique (9) sont disposés en série, selon lequel, dans la section de conducteur neutre (5), un second sectionneur mécanique (10) est disposé, selon lequel un dispositif de commutation à semi-conducteur (11) du disjoncteur de protection (1) est connecté en parallèle au commutateur de dérivation (8), selon lequel, dans la section de conducteur extérieur (2), un dispositif de mesure de courant (12) est disposé, lequel est raccordé à une unité de commande électronique (13) du disjoncteur de protection (1), selon lequel l'unité de commande électronique (13) est configurée pour commander de manière prédéfinissable le commutateur de dérivation (8), le premier sectionneur mécanique (9), le second sectionneur mécanique (10) et le dispositif de commutation à semi-conducteur (11), et selon lequel une résistance (19) fonction de la tension, en particulier une varistance, est disposée en parallèle avec le commutateur de dérivation (8), selon lequel l'unité de commande électronique (13) est configurée pour, lors de l'enclenchement du disjoncteur de protection (1), commander en premier lieu la fermeture du second sectionneur mécanique (10), commander ensuite la fermeture du premier sectionneur mécanique (9), et enclencher le dispositif de commutation à semi-conducteur (11) après un premier laps de temps prédéfinissable, selon lequel le disjoncteur de protection (1) est configuré comme un appareil de commutation de tension alternative, et présente en outre un dispositif de mesure de tension (29), lequel est connecté à l'unité de commande (13), et l'unité de commande électronique (13) est configurée pour commander le premier sectionneur mécanique (9) et le second sectionneur mécanique (10) un second laps de temps prédéfinissable avant un premier passage par zéro d'une tension de réseau raccordée, **caractérisé en ce que** le premier laps de temps est d'une longueur telle que des contacts de commutation du premier sectionneur mécanique (9) et des contacts de commutation du second sectionneur mécanique (10) ont atteint un état stationnaire mécanique, **en ce que** le premier laps de temps est compris entre 0,8 mS et 1,2 mS, en particulier, est de 1 mS, et **en ce que** le second laps de temps a une longueur égale à la moitié du premier laps de temps.

2. Disjoncteur de protection (1) selon la revendication 1, **caractérisé en ce que** l'unité de commande électronique (13) est configurée pour enclencher le commutateur de dérivation (8) lors d'un second passage par zéro de la tension de réseau, qui suit immédiatement le premier passage par zéro.

3. Disjoncteur de protection (1) selon l'une des revendications 1 ou 2, **caractérisé en ce que** la résistance fonction de la tension (19) est configurée comme une varistance ThermoFuse.

4. Disjoncteur de protection (1) selon l'une des revendications 1 à 3, **caractérisé en ce que** le dispositif de commutation à semi-conducteur (11) est configuré comme étant exempt d'atténuateur.
